# EUROPÄISCHE PATENTANMELDUNG

(11) **EP 1 780 064 A2**
(43) Veröffentlichungstag der Anmeldung: **02.05.2007**
(21) Anmeldenummer: 06021933.4
(22) Anmeldetag: 19.10.2006
(51) Int. Cl.: B60J 7/14

(54) **Hardtop-Fahrzeugdach mit außen angeordneter Dachkinematik**

(30) Priorität: 26.10.2005 DE 102005051647
(71) Anmelder: Magna Car Top Systems GmbH, 74321 Bietigheim-Bissingen (DE)
(72) Erfinder: Wezyk, Wojciech, 71065 Sindelfingen (DE); Klein, Berthold, 71277 Rutesheim (DE); Halbweiss, Thomas, 71686 Remseck (DE)

(57) **Zusammenfassung**

Die Erfindung betrifft ein Hardtop-Fahrzeugdach (2) mit mindestens zwei starren Dachteilen (3, 4, 5), wobei mindestens ein Dachteil (3, 4, 5) mittels einer Dachteilkinematik (17, 18) zwischen einer den Fahrzeuginnenraum überdeckenden Schließposition, in der die Dachteile (3, 4, 5) in Fahrtrichtung hintereinander angeordnet sind, und einer den Fahrzeuginnenraum freigebenden Ablageposition verstellbar ist. Erfindungsgemäß ist vorgesehen, dass die Dachteilkinematik (17, 18) der Dachteile (3, 4, 5) auf der dem Fahrzeuginnenraum abgewandten Außenseite mindestens eines Dachteils (3, 4, 5) angeordnet ist.

## Beschreibung

Die Erfindung betrifft ein Hardtop-Fahrzeugdach mit zwei starren Dachteilen gemäß dem Oberbegriff des Anspruches 1.

Das aus der EP 1 463 647 B1 bekannte Hardtop-Fahrzeugdach weist drei starre Dachteile auf, wobei das vordere und das hintere Dachteil mithilfe von Relativkinematiken relativ zu dem mittleren Dachteil verschwenkbar sind. Das mittlere Dachteil ist mittels einer Verstellkinematik an der Karosserie angelenkt. In Ablageposition sind sämtliche Dachteile gleichsinnig in einem Dachteilpaket in einem Ablageraum mit Verdeckkastendeckel abgelegt. Dadurch, dass bei dem bekannten Hardtop-Fahrzeugdach eine Schichtung des Dachteilpaketes mit Ablage von vorderem und hinterem Dachteil oberhalb des mittleren Dachteiles vorgenommen wird, kann das mittlere Dachteil während der Bildung des Dachteilpaketes seine Lage beibehalten, wodurch Beeinträchtigungen des Fahrzeuginnenraumes durch die Paketbildung vermieden werden. Dennoch benötigt die gesamte Dachkinematik viel Platz im Fahrzeuginnenraum, so dass die Kopffreiheit der Insassen bei geschlossenem Hardtop-Fahrzeugdach relativ eingeschränkt ist.

Aus der DE 41 00 677 C2 ist ein Fahrzeugdach, bestehend aus zwei Dachteilen bekannt. Das vordere Dachteil kann zwischen einer Schließposition und einer Öffnungsposition verstellt werden. Hierzu ist das vordere Dachteil mittels Viergelenkkinematiken auf Seitenträgern montiert, die in nach oben offene Aufnahmekanäle im hinteren Dachteil verschoben werden können. Die Seitenträger, die Teil der Dachkinematik sind, befinden sich in Schließstellung des Fahrzeugdaches im Fahrzeuginnenraum und beeinträchtigen damit die Kopffreiheit der Insassen.

Der Erfindung liegt die Aufgabe zugrunde, ein Hardtop-Fahrzeugdach vorzuschlagen, bei dem die Größe des Fahrzeuginnenraumes in Schließposition durch die Dachteilkinematik nicht negativ beeinflusst wird.

Diese Aufgabe wird mit den Merkmalen des Anspruchs 1 gelöst. Vorteilhafte Ausgestaltungen der Erfindung sind in den Unteransprüchen angegeben.

Der Erfindung liegt der Gedanke zugrunde, die gesamte Dachkinematik, oder zumindest eine Dachteilkinematik, zur Verstellung eines Dachteils derart anzuordnen, dass sich die gesamte Dachkinematik, oder zumindest eine Dachteilkinematik, zumindest in Schließposition, außerhalb des Fahrzeuginnenraums befindet. Das mindestens eine verstellbare Dachteil wird von der Außenseite her geführt. Hierdurch haben die Elemente der gesamten Dachkinematik bzw. der Dachteilkinematik keinen Kontakt mehr mit dem Passagierbereich, woraus eine erhöhte Kopffreiheit für die Insassen resultiert. Ferner ist die Sicherheit für die Insassen erhöht, da sich bei einem Unfall die Kinematikelemente nicht innerhalb des Fahrzeuginnenraums deformieren, wodurch Verletzungen der Insassen durch sich verformende Kinematikbauteile vermieden werden.

In Ausgestaltung der Erfindung ist vorgesehen, dass die Dachteilkinematik in Schließposition der Dachteile eine in Fahrzeuglängsrichtung verlaufende Dachreling bildet bzw. Teil einer Dachreling ist. Dabei ist es zur Realisierung des Erfindungsgedankens grundsätzlich ausreichend, wenn der Dachkinematik eine Verbindungsfunktion zukommt, also wenn die Dachteilkinematik zumindest mit einem Dachrelingbauteil eines Dachteils, vorzugsweise gelenkig, verbunden ist und dieses Dachrelingbauteil mit einem anderen Dachteil oder mit einem an dem anderen Dachteil gehaltenen Dachrelingbauteil verbindet. Es ist von Vorteil, wenn zwei parallele, in Fahrzeugquerrichtung beabstandete, Dachrelings vorgesehen sind. Zwischen den Dachrelings können Dachgepäckträger, insbesondere für Fahrräder und Skiboxen, befestigt werden. Die erfindungsgemäße Ausgestaltung der Dachteilkinematik als Dachreling hat den Vorteil, dass in Schließposition das Vorhandensein einer Dachteilkinematik nicht auffällt, da sie in der Form der Dachreling aufgeht. Der Dachkinematik kommt somit, je nach Ausgestaltung, nicht nur eine Verstellfunktion für die Dachteile, sondern gleichzeitig eine Trägerfunktion für Dachgepäckträger zu. Mittels der Erfindung ist es möglich, Targa- und Cabriolet-Fahrzeuge mit einer Dachreling, bei gleichzeitiger Vergrößerung des Fahrzeuginnenraums, zu versehen.

Jede Dachreling umfasst einen in Fahrzeuglängsrichtung verlaufenden Längsträger zur Montage von Dachgepäckträgern. Erfindungsgemäß ist vorgesehen, dass dieser Längsträger aus mindestens zwei, insbesondere in Fahrzeuglängsrichtung fluchtenden, Teillängsträgern gebildet ist. Dabei ist jeder Teillängsträger mit je einem Dachteil fest verbunden. Die Verbindung des Längsträgers bzw. der Teillängsträger mit den Dachteilen erfolgt mit Vorteil über beabstandete Stützfüße, mittels derer die Teillängsträger mit Abstand zu den Dachteilen gehalten sind. Der Zwischenraum zwischen den Dachteiloberseiten und dem Längsträger bzw. den Teillängsträgern erleichtert die Montage etwaiger Dachgepäckträger.

Es ist zweckmäßig, wenn die Dachteilkinematik eine Lenkeranordnung, vorzugsweise eine Viergelenkkinematik, umfasst. Die Lenker der Lenkeranordnung sind auf der Außenseite der Dachteile, vorzugsweise auf der Außenseite zweier benachbarter Dachteile, angelenkt. Selbstverständlich liegt es im Rahmen der Erfindung, die Dachteile nicht unmittelbar an den Dachteilen, sondern an mit den Dachteilen verbundenen Bauteilen, insbesondere Konsolen, anzulenken.

Bevorzugt ist mindestens ein Lenker der Dachteilkinematik mit einem Stützfuß der Dachreling gelenkig verbunden. Hierdurch kann auf eine separate Befestigungskonsole verzichtet werden. Die Stützfüße tragen zum einen einen Teillängsträger und zum anderen dient sie als Anlenkpunkt für einen Lenker der Dachteilkinematik.

Gemäß einer zweckmäßigen Ausgestaltung der Erfindung ist vorgesehen, dass mindestens ein Lenker, vorzugsweise sämtliche Lenker der Dachteilkinematik an mindestens einem Teillängsträger angelenkt sind. Hierbei sind verschiedene Gestaltungsmöglichkeiten denkbar. Gemäß einer vorteilhaften Ausgestaltung verbindet ein Lenker einen Stützfuß eines ersten Teillängsträgers gelenkig mit einem zweiten Teillängsträger. Ebenso ist es denkbar, dass mindestens ein Lenker unmittelbar an zwei, vorzugsweise benachbarten, Teillängsträgern, oder zwischen zwei Stützfüßen, angelenkt ist.

Mit Vorteil ist vorgesehen, dass mindestens ein Lenker, vorzugsweise sämtliche Lenker, der Dachteilkinematik an einem das eine Dachteil in Richtung des anderen Dachteils überragenden, vorzugsweise flachstabförmiger, Anlenkfortsatz angelenkt sind. Dabei ist in Weiterbildung der Erfindung vorgesehen, dass der Anlenkfortsatz von einem Teilabschnitt des Teillängsträgers der Dachreling gebildet ist. Dieser Abschnitt überragt das zugehörige eine Dachteil in Richtung des anderen Dachteils, befindet also in Schließposition oberhalb der Außenfläche des anderen Dachteils. Aufgrund der Anlenkung der Lenker an einem Anlenkfortsatz ist es möglich, die Lenker ausschließlich oberhalb eines Dachteils anzuordnen. Die Verbindung der Dachteile in Längsrichtung wird über den bzw. die Anlenkfortsätze realisiert. Optisch am ansprechendsten ist es; wenn der Anlenkfortsatz mit einem benachbarten Teillängsträger in Schließposition fluchtend angeordnet ist.

In Weiterbildung der Erfindung ist mit Vorteil vorgesehen, dass mindestens ein Abschnitt eines Lenkers, vorzugsweise mindestens ein Abschnitt sämtlicher Lenker, der Dachteilkinematik, in Schließposition parallel zu dem Längsträger angeordnet sind. Auf diese Weise können die Lenker in Schließposition von den Teillängsträgern verdeckt werden. Bevorzugt sind die Lenker auf der in Richtung Fahrzeugmitte weisenden Innenseite der Teillängsträger und/oder der Stützfüße angelenkt, so dass sie von der Fahrzeugseite her betrachtet verdeckt sind. Wenn ein Lenker mit seinem ersten Ende gelenkig mit einem Stützfuß und mit seinem anderen Ende gelenkig mit einem Anlenkfortsatz bzw. einem Teillängsträger verbunden ist, ist es von Vorteil, wenn der Lenker im Wesentlichen L-förmig ausgebildet ist. Der längere Schenkel des L-förmigen Lenkers ist dabei in Schließposition parallel zu dem Längsträger und der kürzere Schenkel parallel zu dem Stützfuß angeordnet. Ebenso ist es denkbar, die Lenker U-förmig auszubilden, um beispielsweise zwei Stützfüße, oder zwei nach unten weisende Fortsätze der Teillängsträger miteinander zu verbinden.

Es ist zweckmäßig, wenn der Teillängsträger, zumindest abschnittsweise, von den Lenkern der Dachteilkinematik gebildet wird. In diesem Bereich kann auf einen separaten, reinen Teillängsträger verzichtet werden.

Bevorzugt sind die Dachteile derart mit der Dachkinematik miteinander gekoppelt, dass sie in Ablageposition übereinander liegend ein Dachteilpaket bilden.

In Ausgestaltung der Erfindung ist vorgesehen, dass das erfindungsgemäße Hardtop-Fahrzeugdach als dreiteiliges Dach mit einem in Schließposition vorderen, mittleren und hinteren Dachteil ausgebildet ist. Sowohl zwischen dem vorderen und dem mittleren Fahrzeugdach als auch zwischen dem mittleren und dem hinteren Fahrzeugdach ist eine Dachteilkinematik vorgesehen, wobei bevorzugt jede Dachteilkinematik Bestandteil einer Dachreling ist, bzw. in Schließposition eine Dachreling bildet. Das dreiteilige Hardtop-Fahrzeugdach kann zu einem Dachteilpaket verfahren werden, welches dann in einem Ablageraum ablegbar ist. Die Lenker der Dachteilkinematiken sind bevorzugt zum einen mit den Stützfüße eines Teillängsträgers und zum anderen mit einem Anlenkfortsatz eines anderen Teillängsträgers gelenkig verbunden.

Gemäß einer alternativen Ausgestaltung der Erfindung ist in mindestens einem Dachteil ein Schiebedach vorgesehen. Das Schiebedach ist bevorzugt längsverschieblich ausgebildet und befindet sich zwischen zwei gegenüberliegenden Dachrelings. In Schließposition ist das Schiebedach verfahrbar. Anstelle oder zusätzlich zu einem Schiebedach kann auch ein Hubdach vorgesehen werden. Bevorzugt ist ein in Fahrzeugquerrichtung verlaufender Windabweiser für die von dem Schiebedach freigegebene Dachöffnung vorgesehen. Der Windabweiser ist bevorzugt aufklappbar ausgebildet.

Weitere Vorteile und zweckmäßige Ausführungen sind den weiteren Ansprüchen, der Figurenbeschreibung und den Zeichnungen zu entnehmen. Es zeigen:
- Fig. 1: ein Fahrzeug mit einem dreiteiligen Hardtop-Fahrzeugdach in Schließposition, wobei auf der Außenseite des Fahrzeug-Daches zwei parallele, in Fahrzeuglängsrichtung verlaufende Dachrelings vorgesehen sind, zwischen denen ein Fahrrad-Dachgepäckträger gehalten ist,
- Fig. 2: das Fahrzeug gemäß Fig. 1 mit demontiertem Dachgepäckträger in einer Zwischenposition während der Verstellbewegung von seiner Schließposition in seine Ablageposition,
- Fig. 3: eine vergrößerte Darstellung des Fahrzeug-Hardtopdaches gemäß Fig. 2,
- Fig. 4: eine Seitenansicht des Hardtop-Fahrzeugdaches gemäß Fig. 3,
- Fig. 5: eine weitere Zwischenposition des Hardtop-Fahrzeugdaches während seiner Verstellbewegung, in der die drei Dachteile ein Dachteilpaket bilden,
- Fig. 6: das Hardtop-Fahrzeugdach in Ablageposition und
- Fig. 7: ein Hardtop-Fahrzeugdach in Schließposition mit zwei in Längsrichtung verschiebbaren Schiebedächern sowie mit einem in Fahrzeugquerrichtung verlaufenden, klappbaren Windabweiser.

In den Figuren sind gleiche Bauteile und Bauteile mit gleicher Funktion mit den gleichen Bezugszeichen gekennzeichnet.

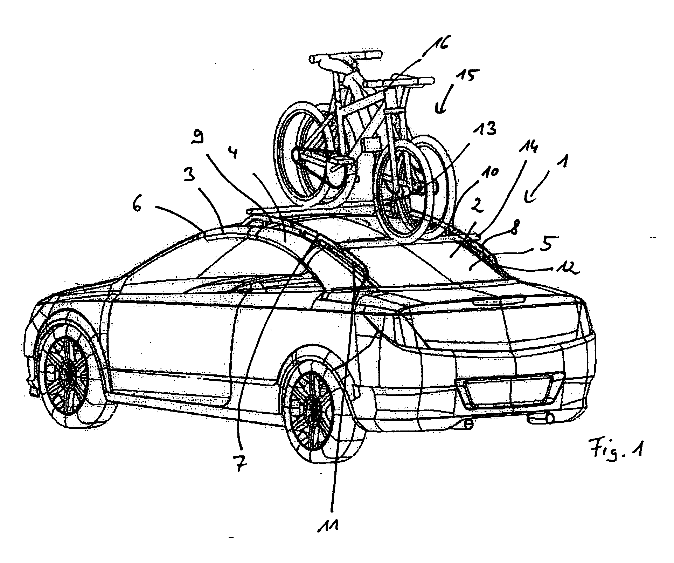

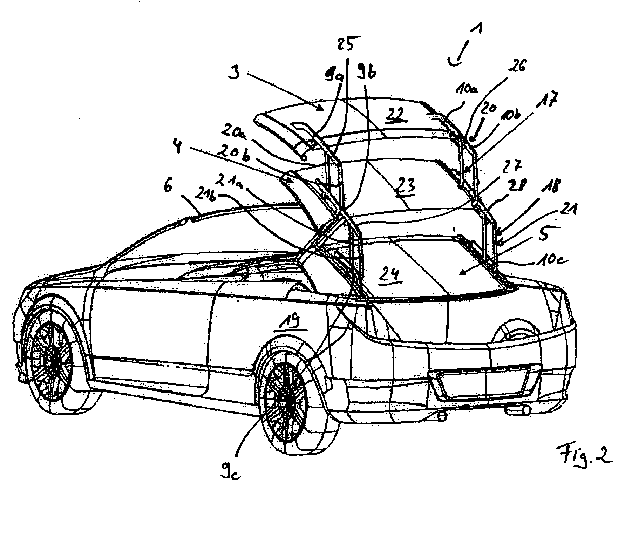

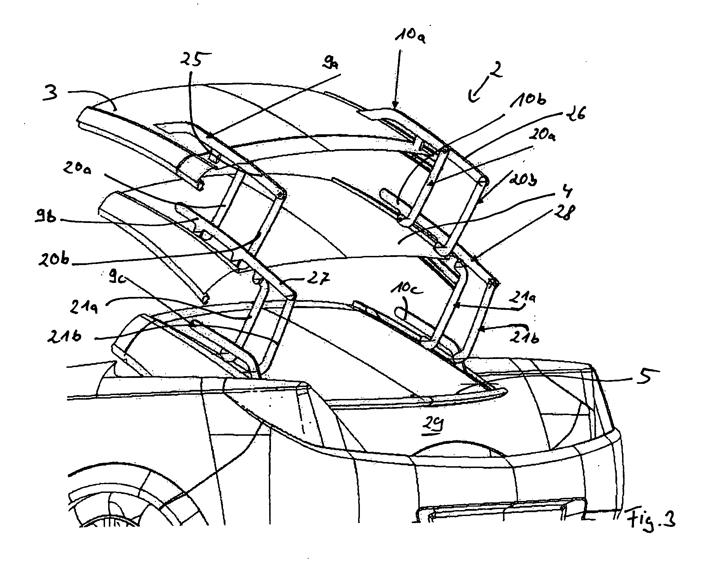

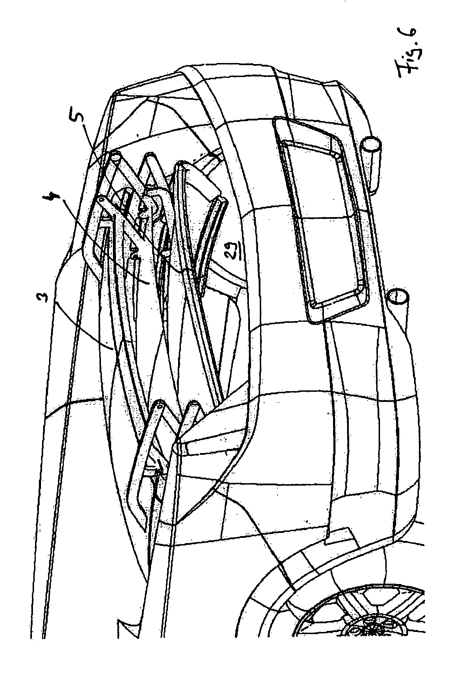

In Fig. 1 ist ein Fahrzeug 1 in einer perspektivischen Ansicht von schräg hinten dargestellt. Das Fahrzeug 1 weist ein dreiteiliges Hardtop-Fahrzeugdach 2, bestehend aus drei Dachteilen 3, 4, 5 auf. Die drei Dachteile 3, 4, 5 sind zwischen der in Fig. 1 dargestellten Schließposition und der in Fig. 6 dargestellten Ablageposition über die in den Fig. 2 bis 5 dargestellten Zwischenpositionen verstellbar. In der in Fig. 1 dargestellten Schließposition sind die drei Dachteile 3, 4, 5 in Fahrtrichtung hintereinander angeordnet. Das vordere Dachteil 3 ist in Schließposition mit einem Windschutzscheibenrahmen 6 verriegelt. Das mittlere Dachteil 4 ist gelenkig sowohl mit dem vorderen Dachteil 3, als auch mit dem hinteren Dachteil 5 verbunden.

Über die drei Dachteile 3, 4, 5 erstrecken sich in Fahrzeuglängsrichtung zwei in Fahrzeugquerrichtung zueinander beabstandete und parallel zueinander verlaufende Dachrelings 7, 8. Beide Dachrelings 7, 8 umfassen einen in Fahrzeuglängsrichtung verlaufenden Längsträger 9, 10, welche über mehrere beabstandete Stützfüße 11, 12 auf den Dachteilen 3, 4, 5 mit Abstand zu den Dachteilen befestigt sind. In den Figuren sind aus Übersichtlichkeitsgründen nur einige wenige Stützfüße exemplarisch mit Bezugszeichen gekennzeichnet. Zwischen den Längsträgern 9, 10 erstrecken sich zwei Querträger 13, 14 eines als Fahrradträger ausgebildeten Dachgepäckträgers 15. Auf den Querträgern 13, 14 sind zwei Fahrräder 16 gehalten.

Insbesondere aus Fig. 2 ist ersichtlich, dass das vordere Dachteil 3 und das mittlere Dachteil 4 über eine Dachteilkinematik 17 verstellbar miteinander verbunden sind. Ebenso ist das mittlere Dachteil 4 mit dem hinteren Dachteil 5 über eine zweite Dachteilkinematik 18 gelenkig verbunden. Das hintere Dachteil 5 ist wiederum mit einer nicht dargestellten Dachteilkinematik gelenkig mit der Fahrzeugkarosserie 19 verbunden. Sowohl die erste Dachteilkinematik 17 als auch die zweite Dachteilkinematik 18 umfassen zwei in Fahrzeugquerrichtung beabstandete Viergelenkkinematiken 20, 21 mit je zwei Lenkern 20a, 20b; 21a, 21b.

Wie aus Fig. 2 ersichtlich ist, sind die Längsträger 9, 10 der parallelen Dachrelings 7, 8 aus jeweils drei Teillängsträgern 9a, 9b, 9c; 10a, 10b, 10c gebildet. Dabei sind die vorderen Teillängsträger 9a, 10a mittels zweier Stützfüße fest mit der Außenseite 22 der vorderen Dachteils 3 verbunden. Die mittleren Teillängsträger 9b, 10b sind mittels zweier in Fahrzeuglängsrichtung beabstandeter Stützfüße fest mit der Außenseite 23 des mittleren Dachteils 4 verbunden. In analoger Weise sind die hinteren Teillängsträger 9c, 10c mittels zweier in Fahrzeuglängsrichtung beabstandeter Stützfüße mit der Außenseite 24 des hinteren Dachteils 5 verbunden. Der jeweils vordere Stützfuß der vorderen Teillängsträger 9a, 10a und der jeweils hintere Stützfuß der hinteren Teillängsträger 9c, 10c sind durch die in den Endbereichen nach unten gebogenen Längsträger 9, 10 selbst gebildet. Es ist denkbar, sämtliche Stützfüße 10, 11 einstückig mit den Teillängsträgern 9a, 9b, 9c; 10a, 10b, 10c auszubilden.

Die in Fahrzeuglängsrichtung beabstandeten Lenker 20a, 20b der Viergelenkkinematiken 20 sind mit ihren in Schließposition hinteren Enden an den Innenseiten der Stützfüße der mittleren Teillängsträger 9b, 10b angelenkt. Mit den gegenüber liegenden Enden sind die Lenker 20a, 20b mit den vorderen Teillängsträgern 9a, 10a gelenkig verbunden. Die in Schließposition hinteren Abschnitte der vorderen Teillängsträger 9a, 10a sind als Anlenkfortsätze 25, 26 ausgebildet. Diese Anlenkfortsätze 25, 26 überragen das vordere Dachteil 3 in Schließposition in Richtung des mittleren Dachteils 4. In Schließposition fluchten sämtliche Teillängsträger 9a, 9b, 9c und 10a, 10b, 10c in Fahrzeuglängsrichtung.

In der in Fig. 1 dargestellten Schließposition sind die längeren Schenkel der L-förmigen Lenker 20a, 20b parallel zu den Teillängsträgern 9a, 9b; 10a, 10b ausgerichtet. Die kürzeren Schenkel der L-förmigen Lenker 20a, 20b erden von den Stützfüßen verdeckt. Auf diese Weise sind die Lenker 20a, 20b von den Teillängsträgern 9a, 9b und 10a, 10b sowie den zugehörigen Stützfüßen der mittleren Teillängsträger 9b, 10b sichtgeschützt.

In analogen Weise sind die Viergelenkkinematiken 21 mit ihren Lenkern 21a, 21b zwischen dem mittleren Dachteil 4 und dem hinteren Dachteil 5 angeordnet. Mit ihren in Schließposition hinteren Enden sind die Lenker 21a, 21b an Stützfüße der hinteren Teillängsträger der Dachrelings 7, 8 angelenkt. Mit den gegenüberliegenden Enden sind die Lenker 21a, 21b an Anlenkfortsätzen 27, 28 der mittleren Teillängsträger 9b, 10b angelenkt. Die längeren Schenkel der L-förmigen Lenker 21b und der U-förmigen Lenker 21a sind in Schließposition parallel zueinander sowie parallel zu den hinteren Teillängsträgern 9c, 10c angeordnet.

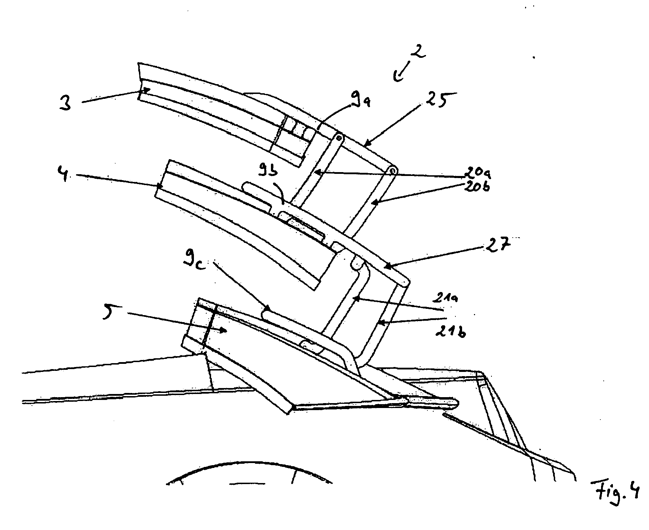

In Fig. 3 ist eine vergrößerte Darstellung des Hardtop-Fahrzeugdaches 2 gemäß Fig. 2 dargestellt. Daher wird bezüglich der Beschreibung des Ausführungsbeispiels gemäß Fig. 3 auf die Beschreibung zu Fig. 2 verwiesen. Zu erkennen sind die Teillängsträger 9a, 9b, 9c und 10a, 10b, 10c, die die beiden beabstandeten Längsträger 9, 10 der Dachrelings 7, 8 bilden. Die Teillängsträger 9a, 9b, 9c sowie 10a, 10b, 10c sind jeweils mit zwei Stützfüßen an den zugehörigen Dachteilen 3, 4, 5 gehalten. Die Verstellkinematik des hinteren Dachteils 5 ist nicht eingezeichnet. Hier kann beispielsweise ebenfalls auf eine an sich bekannte Viergelenkkinematik innerhalb des Ablageraums 29 zurückgegriffen werden.

In Fig. 3 ist besonders deutlich die im Wesentlichen L-förmige Ausbildung der Lenker 20a, 20b sowie 21b zu erkennen. Mit dem kurzen Schenkel sind diese Lenker an Stützfüßen der Teillängsträger 9b, 9c sowie 10b, 10c angelenkt. Mit dem längeren Schenkel sind die Lenker 20a, 20b und 21b an den zugehörigen Anlenkfortsätzen 25, 26, 27, 28 angelenkt. Die Lenker 21a der hinteren Viergelenkkinematik 21 weisen eine Besonderheit auf. Diese Lenker 21a sind U-förmig mit zwei beabstandeten kurzen Schenkeln und einem langen Verbindungsschenkel ausgebildet. Der lange Schenkel ist in Schließposition parallel zu den Teillängsträgern 9b, 9c bzw. 10b, 10c ausgerichtet. Mit ihren beiden kurzen Schenkeln sind die Lenker 21a der hinteren Viergelenkkinematiken 21 an nach unten weisenden Fortsätzen der Teillängsträger 9b, 9c sowie 10b, 10c angelenkt.

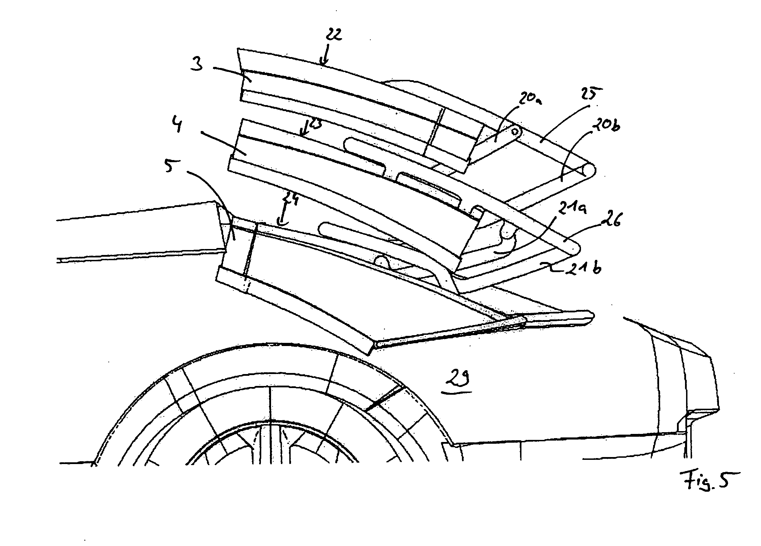

In Fig. 4 ist das Fahrzeugdach gemäß Fig. 3 in einer Seitenansicht dargestellt. In dieser Zwischenposition weisen die Lenker 20a, 20b, 21a, 21b zu den Teillängsträgern 9a, 9b, 9c einen in etwa rechten Winkel auf.

In Fig. 5 sind die Dachteile 3, 4 bereits soweit in einer kombinierten translatorisch-rotatorischen Bewegung nach hinten verschwenkt, dass sie ein Dachteilpaket bilden. Innerhalb des Dachteilpakets sind die Dachteile 3, 4, 5 gleichsinnig mit nach oben gerichteter Dachaußenseite angeordnet. Das hintere Dachteil 5 ist mittels der nicht dargestellten zugehörigen Dachteilkinematik bereits ein Stück nach hinten unten in Richtung Ablageraum 29 verstellt.

In Fig. 6 ist das Dachteilpaket bestehend aus den drei Dachteilen 3, 4, 5 innerhalb des Ablageraums 29 in einem Dachteilpaket abgelegt. Die Dachteile 3, 4,5 sind übereinander und parallel zueinander angeordnet. Der Ablageraum 29 ist mittels eines nicht dargestellten Verdeckkastendeckels verschließbar.

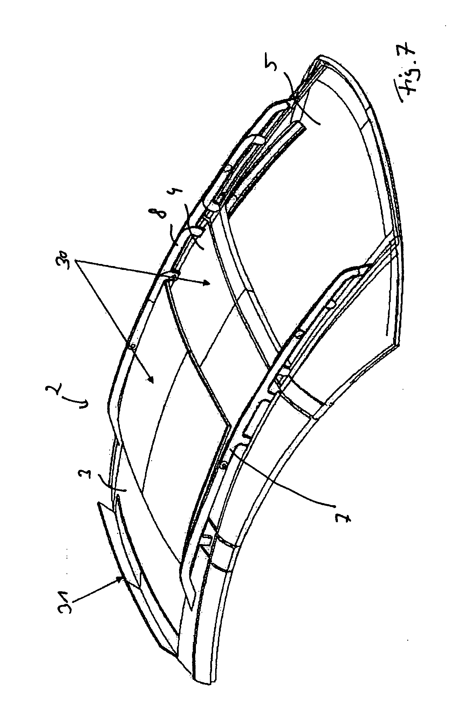

In Fig. 7 ist eine alternative Ausführungsvariante eine Hardtop-Fahrzeugdaches 2 dargestellt. Die Dachteilkinematiken zur Verstellung des vorderen und des mittleren Dachteils sind Bestandteil zweier paralleler, in den Seitenbereichen des Fahrzeugdaches 2 angeordneter, Dachrelings 7, 8. In das vordere Dachteil 3 sowie in das mittlere Dachteil 4 sind Schiebedachteile 30 integriert, die in Fahrzeuglängsrichtung dachteilübergreifend verschiebbar ausgebildet sind. Beispielsweise können beide Schiebedächer 30 auf das hintere Dachteil 5 aufgeschoben werden, wodurch jeweils eine Dachöffnung im vorderen Dachteil 3 und im mittleren Dachteil 4 freigegeben wird. Am vorderen Dachteil 3 ist ein klappbarer Windabweiser 31 vorgesehen. Ein derart ausgebildetes Hardtop-Fahrzeugdach 2 kann in Coupéstellung, in Cabriostellung sowie mit geöffneten Schiebedachteilen 30 genutzt werden.

## Patentansprüche

1. Hardtop-Fahrzeugdach mit mindestens zwei starren Dachteilen (3, 4, 5), wobei mindestens ein Dachteil (3, 4, 5) mittels einer Dachteilkinematik (17, 18) zwischen einer den Fahrzeuginnenraum überdeckenden Schließposition, in der die Dachteile (3, 4, 5) in Fahrtrichtung hintereinander angeordnet sind, und einer den Fahrzeuginnenraum freigebenden Ablageposition verstellbar ist,
**dadurch gekennzeichnet,**
**dass** die Dachteilkinematik (17, 18) der Dachteile (3, 4, 5) auf der dem Fahrzeuginnenraum abgewandten Außenseite (22, 23, 24) mindestens eines Dachteils (3, 4, 5) angeordnet ist.

2. Hardtop-Fahrzeugdach nach Anspruch 1,
**dadurch gekennzeichnet,**
**dass** die Dachteilkinematik (17, 18) in Schließposition eine in Fahrzeuglängsrichtung verlaufende Dachreling (7, 8) bildet oder Teil einer Dachreling (7, 8) ist.

3. Hardtop-Fahrzeugdach nach Anspruch 2,
**dadurch gekennzeichnet,**
**dass** die Dachreling (7, 8) in Schließposition mindestens einem in Fahrzeuglängsrichtung verlaufenden, aus mindestens zwei Teillängsträgern (9a, 9b, 9c; 10, 10b, 10c) bestehenden Längsträger (9, 10) umfasst.

4. Hardtop-Fahrzeugdach nach Anspruch 3,
**dadurch gekennzeichnet,**
**dass** der Längsträger (9, 10) an jedem Dachteil (3, 4, 5) mittels mindestens einem Stützfuß (11, 12) mit Abstand zu den Dachteilen (3, 4, 5) gehalten ist.

5. Hardtop-Fahrzeugdach nach einem der vorhergehenden Ansprüche,
**dadurch gekennzeichnet,**
**dass** die Dachteilkinematik (17, 18) eine Lenkeranordnung, vorzugsweise eine Viergelenkkinematik, umfasst, und dass die Lenker (20a, 20b; 21a, 21b) der Lenkeranordnung auf der Außenseite (22, 23, 24) der Dachteile (3, 4, 5) angelenkt sind.

6. Hardtop-Fahrzeugdach nach Anspruch 5,
**dadurch gekennzeichnet,**
**dass** mindestens ein Lenker (20a, 20b; 21a, 21b), vorzugsweise sämtliche Lenker (20a, 20b; 21a, 21b), der Dachteilkinematik (17, 18) an jeweils mindestens einem Stützfuß (11, 12) angelenkt sind.

7. Hardtop-Fahrzeugdach nach einem der Ansprüche 5 oder 6,
**dadurch gekennzeichnet,**
**dass** mindestens ein Lenker (20a, 20b; 21a, 21b), vorzugsweise sämtliche Lenker (20a, 20b; 21a, 21b), der Dachteilkinematik (17, 18) an mindestens einem Teillängsträger (9a, 9b, 9c; 10, 10b, 10c) (9, 10) angelenkt sind.

8. Hardtop-Fahrzeugdach nach einem der Ansprüche 5 bis 7,
**dadurch gekennzeichnet,**
**dass** mindestens ein Lenker (20a, 20b; 21a, 21b), vorzugsweise sämtliche Lenker (20a, 20b; 21a, 21b), der Dachteilkinematik (17, 18) an einem das eine Dachteil (3, 4, 5) in Richtung des anderen Dachteils überragenden Anlenkfortsatz (25, 26, 27, 28) angelenkt sind.

9. Hardtop-Fahrzeugdach nach Anspruch 8,
**dadurch gekennzeichnet,**
**dass** der Anlenkfortsatz (25, 26, 27, 28) ein Abschnitt eines Teillängsträgers (9a, 9b, 9c; 10, 10b, 10c) der Dachreling (7, 8) ist.

10. Hardtop-Fahrzeugdach nach einem der Ansprüche 3 bis 9,
**dadurch gekennzeichnet,**
**dass** mindestens ein Abschnitt eines Lenkers (20a, 20b; 21a, 21b), vorzugsweise mindestens jeweils ein Abschnitt sämtlicher Lenker (20a, 20b; 21a, 21b), der Dachteilkinematik (17, 18), in Schließposition parallel zu dem Längsträger (9, 10) angeordnet sind.

11. Hardtop-Fahrzeugdach nach einem der Ansprüche 3 bis 10,
**dadurch gekennzeichnet,**
**dass** mindestens ein Lenker (20a, 20b; 21a, 21b), vorzugsweise sämtliche Lenker (20a, 20b; 21a, 21b), der Dachteilkinematik (17, 18), zumindest abschnittsweise, den Längsträger (9, 10) oder einen Teillängsträger (9a, 9b, 9c; 10, 10b, 10c) (9, 10) bilden.

12. Hardtop-Fahrzeugdach nach einem der Ansprüche 3 bis 11,
**dadurch gekennzeichnet,**
**dass** mindestens ein Lenker (20a, 20b; 21a, 21b), vorzugsweise sämtliche Lenker (20a, 20b; 21a, 21b), auf der in Richtung Längsmittelachse weisenden Innenseite der Teillängsträger (9a, 9b, 9c; 10, 10b, 10c) (9, 10) und/oder der Stützfüße (11, 12) angelenkt sind.

13. Hardtop-Fahrzeugdach nach einem der vorhergehenden Ansprüche,
**dadurch gekennzeichnet,**
**dass** die beiden Dachteile (3, 4, 5) mittels der Dachteilkinematik (17, 18) relativ zueinander verstellbar sind, derart, dass die Dachteile (3, 4, 5) in Ablageposition übereinander liegen und ein Dachteilpaket bilden.

14. Hardtop-Fahrzeugdach nach einem der vorhergehenden Ansprüche,
**dadurch gekennzeichnet,**
**dass** das Hardtop-Fahrzeugdach (2) als dreiteiliges Dach mit einem in Schließposition vorderen, mittleren und hinteren Dachteil (3, 4, 5) ausgebildet ist.

15. Hardtop-Fahrzeugdach nach Anspruch 14,
**dadurch gekennzeichnet,**
**dass** das mindestens ein Lenker (20a, 20b), vorzugsweise sämtliche Lenker (20a, 20b), der Dachteilkinematik (17) zwischen dem vorderem und dem mittleren Dachteil (3, 4) einerseits auf der Außenseite (23) des mittleren Dachteils (3), vorzugsweise an mindestens einem Stützfuß (11, 12) der Längsträger (9, 10) der Dachreling (7, 8), und andererseits an mindestens einem in Richtung des mittleren Dachteils weisenden Anlenkfortsatz (25, 26) des vorderen Dachteils (3) angelenkt sind und/oder das mindestens ein Lenker (21a, 21b), vorzugsweise sämtliche Lenker (21a, 21b), der Dachteilkinematik (18) zwischen dem hinteren und dem mittleren Dachteil (5, 4) einerseits auf der Außenseite (24) des hinteren Dachteils (5), vorzugsweise an mindestens einem Stützfuß (11, 12) der Längsträger (9, 10) der Dachreling (7, 8), und andererseits an mindestens einem in Richtung des hinteren Dachteils (5) weisenden Anlenkfortsatz (27, 28) des mittleren Dachteils (4) angelenkt sind.

16. Hardtop-Fahrzeugdach nach einem der Ansprüche 14 oder 15,
**dadurch gekennzeichnet,**
**dass** alle Dachteile (3, 4, 5) in Ablageposition gleichsinnig mit nach oben gerichteter Dachaußenseite im Dachteilpaket übereinander abgelegt sind.

17. Hardtop-Fahrzeugdach nach einem der vorhergehenden Ansprüche,
**dadurch gekennzeichnet,**
**dass** in mindestens einem Dachteil (3, 4, 5), vorzugsweise in zwei Dachteilen (3, 4, 5), ein Schiebedach (30), insbesondere zwischen zwei in Querrichtung beabstandeten Dachrelings (7, 8), integriert ist.
